(19) Europäisches Patentamt
European Patent Office
Office européen des brevets

(11) **EP 2 820 589 B1**

(12) **EUROPEAN PATENT SPECIFICATION**

(45) Date of publication and mention
of the grant of the patent:
**23.10.2019 Bulletin 2019/43**

(51) Int Cl.:
*G06F 21/62* (2013.01)          *H04L 29/06* (2006.01)
*H04L 29/08* (2006.01)          *G06F 16/955* (2019.01)

(21) Application number: **13708116.2**

(22) Date of filing: **27.02.2013**

(86) International application number:
**PCT/EP2013/053964**

(87) International publication number:
**WO 2013/127877 (06.09.2013 Gazette 2013/36)**

(54) **DELIVERING DATA OVER A NETWORK**

BEREITSTELLUNG VON DATEN ÜBER EIN NETZ

REMISE DE DONNÉES SUR UN RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.02.2012 GB 201203558**

(43) Date of publication of application:
**07.01.2015 Bulletin 2015/02**

(73) Proprietor: **Qando Services Inc.
Tortola (VG)**

(72) Inventors:
• **SYRGABEKOV, Iskender
London Greater London WiW 5NG (GB)**
• **ZADAULY, Yerkin
Alamty, 050051 (KZ)**

(74) Representative: **Boult Wade Tennant LLP
5th Floor, Salisbury Square House
8, Salisbury Square
London EC4Y 8AP (GB)**

(56) References cited:
**US-A1- 2002 114 341     US-A1- 2007 156 842
US-A1- 2008 126 357**

**Description**

**Field of the Invention**

The present invention relates to a system and method for sending and receiving content data across a network and in particular, web pages across the Internet.

**Background of the Invention**

Technology for providing content data from a web server to a browser across a network such as the Internet is well known. For simple static web pages, HTML data may be stored on the web server and provided to one or more browsers upon request. For example, a URL may be typed into a browser, which specifies the location of the requested content. A web server at that location then responds by providing the requested content data or HTML web page.

For more complex content, especially where interaction between a user operating the browser and the web server is required then server side or client side processing may take place. Under these circumstances, the request from the browser may include data sent to the web server forming two way communication.

This two way communication may include sensitive or valuable information and so various types of encryption involving symmetric keys, public key and private key, and digital signatures may be used. The data (transmitted and received over the Internet) may be readily intercepted but decryption may involve significant overheads. Nevertheless, the web server itself must have access to the unencrypted

data at some point during processing in order to meet the browser requests. Therefore, the web server or database storing content may become vulnerable to attack as they contain a concentration of valuable or sensitive information.

Furthermore, the web server or group of web servers may become vulnerable to denial of service type attacks where a volume of requests is initiated that can overwhelm the resources of the web server or group of web servers. Under such attacks or under especially high traffic volumes, requests from browsers may go unfulfilled.

Certain countries may wish to restrict access to areas of the Internet by blocking or filtering incoming web traffic. The web traffic may include news and other public information that is not encrypted, making it straightforward for such regimes to restrict legitimate access. Individual browsers or groups of browsers may be monitored to determine if they are attempting access to such material, leading to significant censorship. Therefore, users of browsers and web servers supplying content data to them may prefer to avoid such monitoring of activity.

Therefore, there is required a system of providing content data that overcomes these problems.

US 2007/0156842 describes a distributed web-services based storage system. A client request for access to a given data object is received. The request includes a key value corresponding to the object. For the given key object, the respective key map entry includes a key value and locator value corresponding to replicas of the object.

US 2008/126357 describes a distributed file storage and transmission system that stores redundant copies of segments of a file on multiple remote storage units. A file tracker is maintained that identifies where each fragment is stored. The file tracker is provided to another user allowing them to access the file.

**Summary of the Invention**

In accordance with a first aspect there is provided a method of delivering content data over a network as described in claim 1.

Therefore, the content data, which may be used to render a web page, for example, may be sent more securely and/or reliably. The enablement information may alternatively be described as access information, location data, an identifier of these items or a key to decrypt or render readable such information, for example.

The request includes information enabling a server or processor to find and retrieve the separate data components from the one or more storage locations. Where a key is sent then data allocation information may be stored local to the processor (or server) or elsewhere, but only accessible to the processor on receipt of a valid key. Enabling retrieval of the separate data components may also include providing an indication of which set of allocation data (e.g. FAT table) out of many alternatives to use to respond to a particular request.

Optionally, processing the enablement information may further comprise the step of decrypting encrypted data allocation information using a decryption key.

Optionally, the request may be received over the Internet and separate data components may be sent over the Internet. The request and/or data may be sent using HTTP, for example. The network may use the internet protocol, for example.

Preferably, the storage locations may be separate storage locations. They may be physically and/or logically separate, for example. They may be provided with addresses or unique addresses such as IP addresses, for example.

Optionally, the separate storage locations may be physically and/or remote separate storage locations.

Optionally, processing the enablement information to determine data allocation further comprises generating a file allocation table. Processing may include reading, decrypting or using the supplied information to identify and/or decrypt information from other sources, for example.

Preferably, the separate data components may be sent together with data component identifiers. This facilitates more convenient restoration of the data or payload (reconstructed content data sent in response to the request).

Optionally, the separate data components may include parity data such that any one or more of the separate data components are recreatable from the remaining separate data

components and the parity data. The parity data may be stored, transmitted to the requester, referenced by the data allocation information or otherwise handled in the same way as the separate data components.

Advantageously, the content data may comprise any one or more of: page layout, design elements, video, graphics, audio and web page content.

According to a second aspect there is provided method of retrieving content data across a network as described in claim 9.

Preferably, generating the content may further comprise reconstructing the content data from a data map providing an indication of how the separate data components form the content data. The data map may also be received in response to the request.

Optionally, the separate data components may include parity data and wherein generating the content data further comprises the steps of:

regenerating any missing data components from the parity data and the remaining data components; and reconstructing the received data components and any regenerated missing data components to form the content data. This improved reliability may be especially apparent when data components are susceptible to becoming unavailable due to loss on route or could not be retrieved from where they were stored (the storage locations may be removed from the network, for example).

Optionally, a data map describes which parity data corresponds with which data components.

According to a third aspect there is provided a server as described in claim 10.

In this sense a server responds to requests received from a network. The server may be web server, for example.

Optionally, the logic to process the enablement information may be further configured to decrypt encrypted data allocation information using a decryption key.

According to a fourth aspect there is provided a client for retrieving content data across a network as described in claim 11.

The client may be a browser, terminal, mobile terminal or any processor making requests for data across a network.

Preferably, the logic configured to generate the content data from the separated data components may further comprise logic configured to:

reconstruct the content data from a data map providing an indication of how the separate data components form the content data.

Preferably, the data components may include identifiers corresponding to identifiers within the data map.

Advantageously, the separate data components may include parity data and wherein the logic configured to generate the content data further comprises logic configured to:

regenerate any missing data components from the parity data and the remaining data components; and reconstruct the received data components and any regenerated missing data components to form the content data.

Preferably, the client may further comprise logic configured to generate a web page from the content data.

According to an example there is provided a method of storing content data comprising the steps of:

dividing the content data into a plurality of separate data components; storing the separate data components within one or more storage locations; generating data allocation information describing how the separate data components are allocated within the one or more storage locations; and generating a data map providing an indication of how the separate data components form the content data. Therefore, the content data may be stored more securely.

Preferably, the method may further comprise the step of generating an identifier for each separate data component and wherein the data map includes in its indication the identifiers for the separate data components.

Optionally, the method may further comprise the step of encrypting the data allocation information and/or the data map.

Preferably, the content data may be web content.

Optionally, the method may further comprise the step of:
generating parity data for each data component and another data component of the plurality of message components.

Optionally, the method may further comprise the step of:
generating parity data for each data component and a second other data component of the plurality of data subsets.

Preferably, the method may further comprise the step of storing the generated parity data in the one or more storage locations. The parity data (or redundant data) may then be treated and processed in a similar way to the data components.

The methods described above may be implemented as a computer program comprising program instructions to operate a computer. The computer program may be stored on a computer-readable medium or transmitted as a signal. The logic may be provided as software, firmware, installed instructions or received as scripts, for example.

## Brief description of the Figures

The present invention may be put into practice in a number of ways and embodiments will now be described by way of example only and with reference to the accompanying drawings, in which:

FIG. 1 shows a schematic diagram of a system for sending content data from a web server to a browser, given by way of example only;

FIG. 2 shows a schematic diagram of a system for providing content data from the web server of figure 1 to the browser;

FIG. 3 shows a flow diagram of a method for storing content data including a dividing step;

FIG. 4 shows a flow diagram of a method for sending the stored content data of figure 3 to the browser;

FIG. 5 shows a flow diagram of a method for requesting content data including a data regenerating step;

FIG. 6 shows a schematic diagram indicating a method for generating parity data as part of the dividing step of figure 3, given by way of example only;

FIG. 7 shows a schematic diagram of an illustrative method of the data regenerating step of figure 5 and using parity data generated in accordance with the method shown in figure 6; and

FIG. 8 shows a schematic diagram of a further illustrative method for reconstructing missing data as part of the combining step of figure 5 and using the parity data generated using the method of figure 6.

It should be noted that the figures are illustrated for simplicity and are not necessarily drawn to scale.

## Detailed description of the preferred embodiments

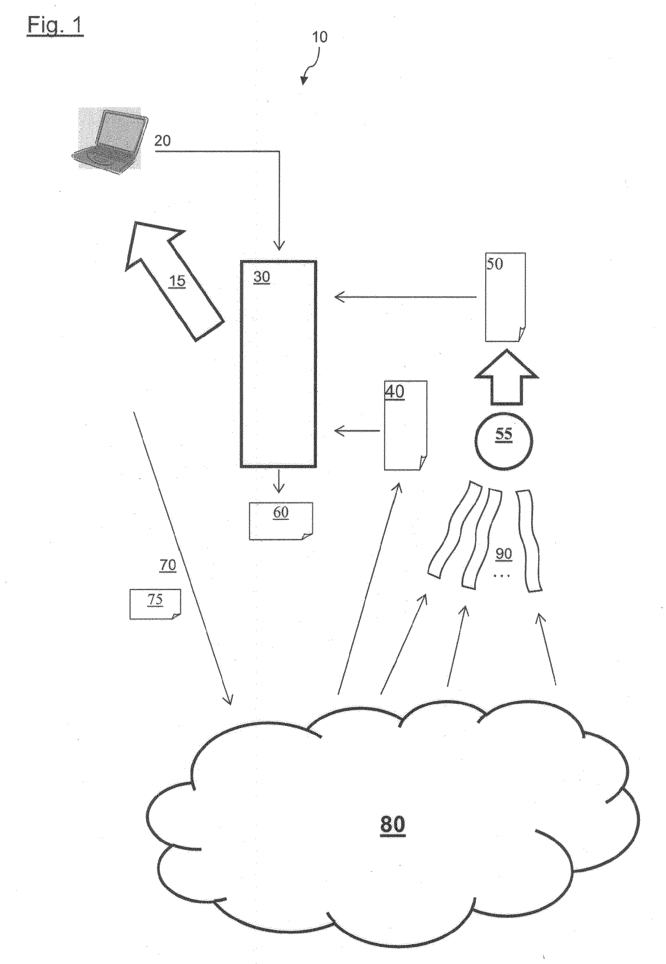

Figure 1 shows a high level schematic diagram of a system 10 for providing content data 15 to a terminal, client or browser 20.

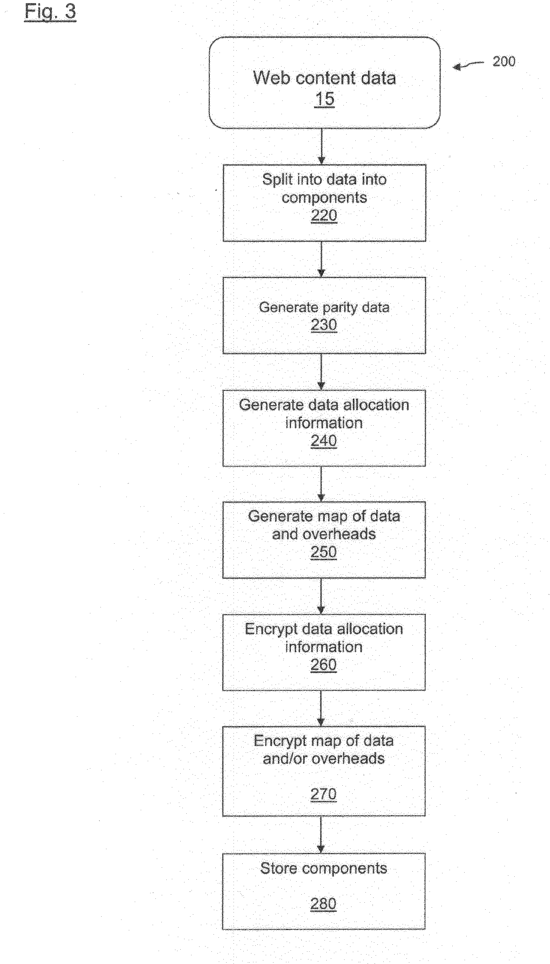

The content data 15 itself may reside in a distributed storage system 80 as separate data components 90 forming the content data 15. Division of the content data 15 into the separate data components 90 is described with reference to figure 3 later on.

In order to retrieve the content data 15, the browser 20 issues a request 70 that includes enablement information or a key enabling or allowing the distributed storage system 80 to retrieve the particular data components 90. Without this enablement information, the server may not be able to retrieve the content data due to security restrictions or simply because the server would not have enough information to determine what particular data to retrieve or where to retrieve it from. These data components 90 may be stored separately and so the enablement information may provide the system with the information required to determine the allocation and location of the data components 90 within the storage system 80 or provide the system with access to this allocation information.

For example, the enablement information may include a cryptographic key that may be used to decrypt a file allocation table (FAT), describing the allocation of data within storage system 80. Alternatively, the request 70 may include the file itself either encrypted or as plain text, depending on security requirements. The storage system may include multiple separate and remote storage devices and the separate data components 90 may be distributed amongst these different and/or remote storage locations.

Preferably, within the client or browser 20, processing may take place to join the separate data components 90 to provide content data that may be read and rendered successfully and correctly.

For processing logic 55 may provide the initial combining steps producing a single set of data 50, which may be considered to be a payload, for example.

Along with the separate data components 90, the distributed storage system 80 may provide additional information or overheads 40 to the requesting browser 20. For example, these overheads 40 may include identifiers for each separate data component 90, a data map describing an indication of how the separate data components 90 may form the resultant content data (e.g. a web page). For example, the payload 50 may include text, features, and other media. Any overheads 40 may provide an indication or information as to how the payload should be reconstructed and rendered. This takes place in post processor 30, which receives the payload 50, the overhead and preferably a decryption key (which may be the same or different to that formed provided in the request 70). This decryption key may be used to decrypt aspects or the entire set of overheads 40 producing a map of data 60 to be used via the post processor 30 to compile and/or render the content data 15 in its correct form to be displayed or played to the user.

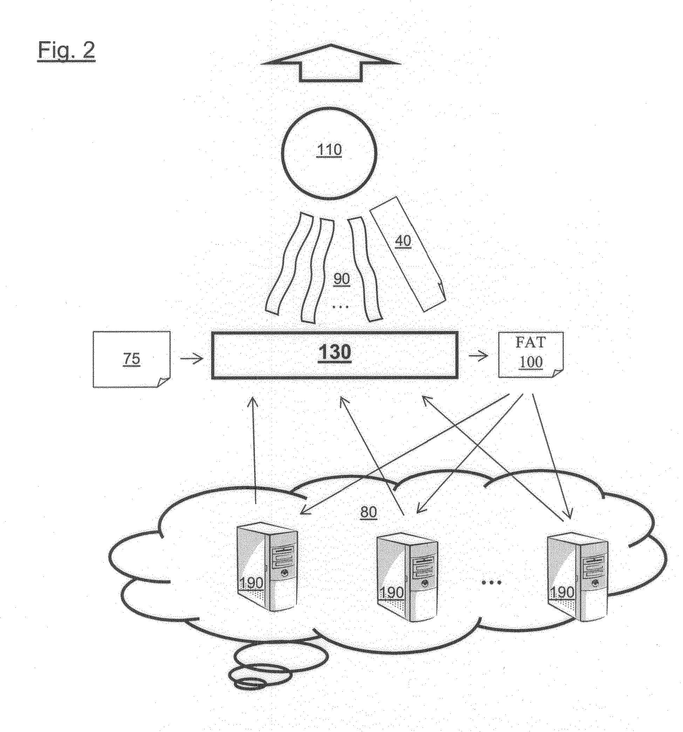

Figure 2 shows a schematic diagram providing more detail describing how the request 70 from the browser 20 is met by the distributed storage system 80. The distributed storage system 80 may include several storage devices 190, which may also act as separate web servers. In this embodiment, the request 70 from the browser 20 includes a key 75, which may be used within a processor 130 executing logic to enable decryption of the FAT 100. Processor 130 may also comprise a web server or other server-type functionality. The processor 130 uses the decrypted FAT 100 to locate and retrieve the separate data components 90 from the separate storage locations 190 within the distributed storage system 80. The individual storage locations 190 may be separated across a wide area such that local events disrupting or destroying individual storage devices 190 will not affect the remaining storage devices 190 within the distributed storage system 80.

Once the separate data components 90 have been retrieved from their storage devices, the processor 130 also retrieves the overheads 40 (either from an individual location or again, separate storage locations 190). This stack of data 110 is sent to the browser for processing.

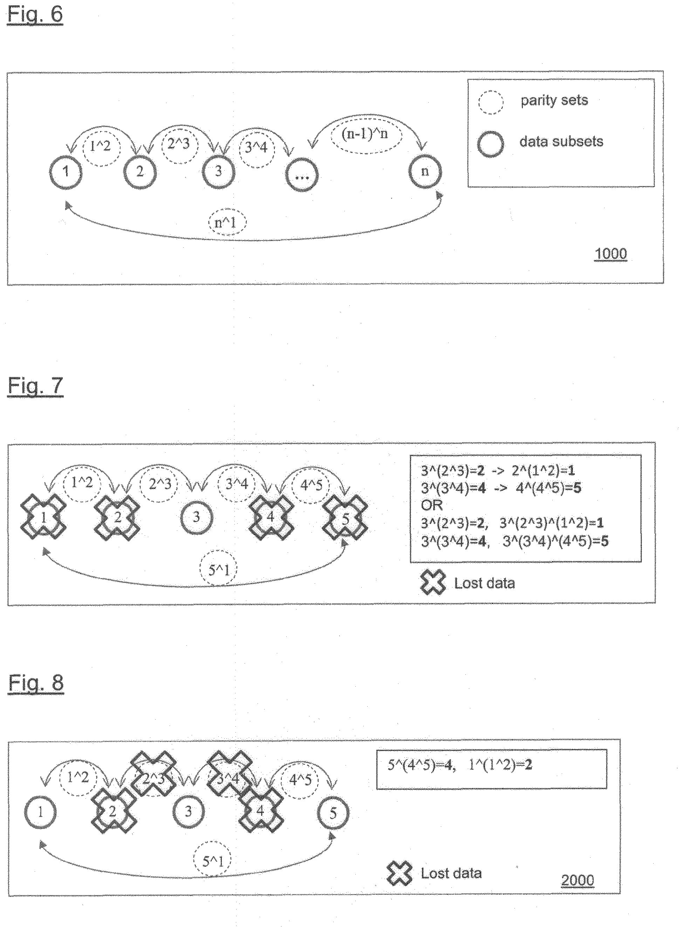

Figure 3 shows a flow chart of a method 200 for storing content data within the separate storage locations 190 of the distributed storage system 80. Content data 15 is split or divided into the data 220 components 90 at step 220. Parity data is generated for the separate data components at step 230. Generation of the parity data is described with reference to figures 6 to 8. At step 240, data allocation information is generated. This data allocation information may be in the form of the FAT 100 described with reference to figure 2. The data allocation information describes how and where each data component is stored in the separate storage locations 190 and may be used when retrieving such separate data components 90. The data allocation information may be generated at the time of storage or in advance. In particular, the data allocation information may be specific to the web content data 15 being stored such that this particular item of content data is recoverable when stored within the distributed storage system 80.

In order to reconstruct the original web content data 15 from its separate data components 90, a map of data is generated at step 250. This map of data 60 may be used by the browser 20 to reconstruct and render the content data 15 as required. The separate data components 90 may have assigned one or more, or perhaps each of them, an identifier that is referenced in the map of data 60. Therefore, during or preferably before this step, such overheads may also be generated. The identifiers may be reference both within the FAT 100 and the data map 60.

The data allocation information or FAT 100 may be encrypted at step 260 to improve security. Furthermore, the map of data and/or overheads may be encrypted at step 270 also to improve security.

In the meantime, or whilst the previous steps are taking place, the separate data components 90 may be stored within the allocated storage devices 190 in accordance with the allocation data allocation information or FAT 100.

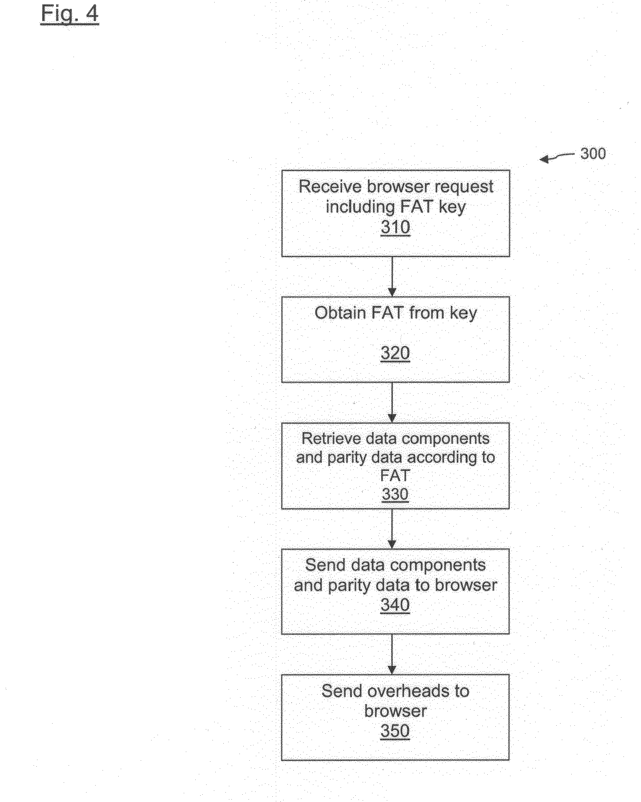

Figure 4 shows a flowchart for responding to a browser request for data content 15 issued by a browser 20. This method 300 may be executed by a processor 130, for example.

A browser request including the FAT key 75 may be received at step 310. At step 320, the FAT 100 may be obtained using the FAT key 75, preferably during a decryption procedure. A FAT 100 may provide the data allocation information generated at step 240 of method 200. This FAT 100 may be stored locally within the processor 130, but only decryptable on receipt of the key 75 by accompanying the request 70, for example. In other words, the request includes enablement information to enable retrieval of the content data from one or more storage locations and this enablement information in this particular example is in the form of a decryption key 75.

At step 330, the data components and any accompanying parity data may be retrieved according to the FAT 100 from the separate storage devices 190. These retrieved data components and parity data are sent to the requesting browser 20 at step 340. At the same time or separately, the overheads, including data component identifiers are also sent to the requesting browser at step 350.

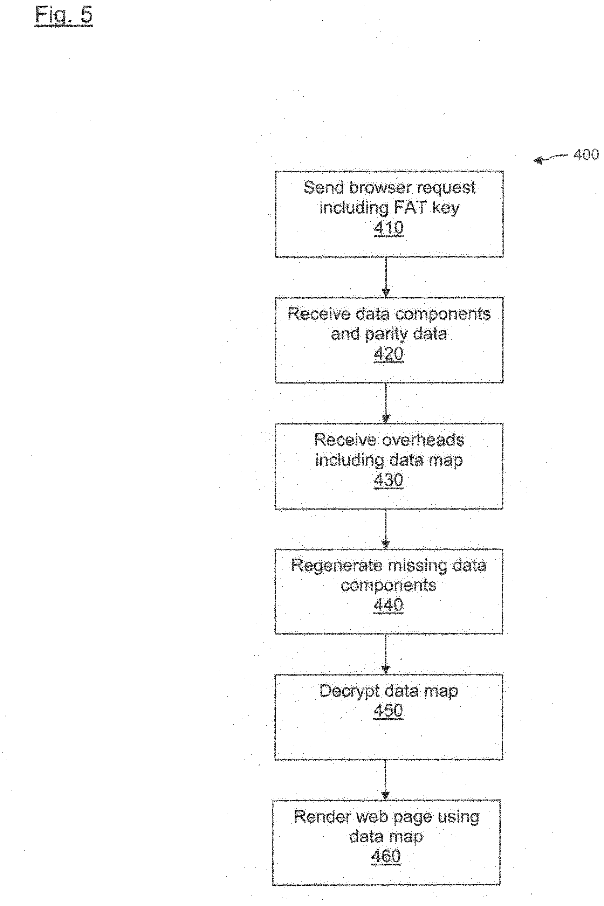

Figure 5 shows a flow chart of a method 400 carried out within the browser 20 for requesting and then rendering content data. The browser sends a request at step 410. This request includes the FAT key 75. In response to this request, data components and parity data are received at step 420. Furthermore, the overheads 40 and data map information are received at step 430. Any missing data components are regenerated or recreated at step 440. An example regeneration procedure is described in further detail with reference to Figures 5, 6, 7 and 8, which uses the received parity data as well as any remaining or available data components.

As the data map 60 is in encrypted form, the data map may be decrypted at step 450. The received data components 90 and any regenerated data components are used to restore the payload 50 forming the original information. The decrypted data map 60 along with the overheads 40 (data component identifiers) are used to render and form the resultant web page at step 460 for display or play to a user.

Simple division of the content data may be used to generate message components of equal or substantially equal size or length. However, in order to improve security and/or data recovery then more complex error correcting or secure algorithms may be used in this procedure. Corresponding regeneration or combining algorithms or collating steps may be used when receiving the content data. To aid reliability, the components may include parity data generated as described with reference to figures 6, 7 and 8. As an example, this processing may occur within or as part of the core processing logic 55.

For example, parity data may be generated using the exclusive OR function (XOR). e.g.:

$$(A)0100 \text{ ^ } (B)0010 = (P)0110 \qquad\qquad \text{equation 1}$$

where ^ is the XOR function.

Should either data set A or B (i.e. data component) be lost, then the missing data may be reconstructed from the remaining data and the parity data (P) using the same XOR function, for example:

$$(A)0100 \text{ ^ } (P)0110 = (B)0010 \qquad\qquad \text{equation 2}$$

In order to generate redundant data to protect a particular message or data set, then this original data (F) may be divided into equal blocks or subsets. This may be represented as:

$$F\{1, 2, 3, \dots n\} \qquad\qquad \text{equation 3}$$

Parity data may be generated as:

$$1\text{^}2, 3\text{^}4, \dots (n-1)\text{^}n \qquad\qquad \text{equation 4}$$

Figure 6 shows a method 1000 for generating more robust sets of parity data. This method 1000 allows for a greater number of data subset (and/or parity data) losses before the data becomes unrecoverable. The solid numbered circles 1, 2, 3,...n, represent data subsets formed by dividing the original data. Two sets of parity data are generated for each data subset. Each data subset is paired with another data subset and parity data is generated. The data subset is then paired with a different data subset and a further set of parity data is generated. In other words, each data subset is associated with two different other data subsets with parity data generated for each pairing. For example, in figure 6 this is shown as each data subset being paired with both of its neighbours (e.g. 2 paired with 1 and 2 also paired with 3). The first (1) and last (n) data subsets only have one neighbour (2 and n-1 respectively). Therefore, the first data subset is paired with the last data subset so that more than one set of parity data may be associated with the end data sets. However, any other combination and permutation may be used so that each data subset has at least two parity data sets associated with it. In notation form, this may be described as:

$$C\{1\text{^}2, 3\text{^}4, \dots (n-1)\text{^}n, n\text{^}1\} \qquad\qquad \text{equation 5}$$

In an example where the original data are divided into five data subsets, the loss of four data subsets may still enable reconstruction of all of the original data provided that all of the parity data sets are retrievable. Such a situation is shown in figure 7, which schematically shows an example method 100 for reconstructing or regenerating missing data subsets.

In this example, the third data subset is available as well as the five parity data sets (1^2, 2^3, 3^4, 4^5 and 5^1). The box in figure 7 shows two alternative ways in which each of the missing data subsets 1, 2, 4 and 5 may be reconstructed using the XOR function.

Figure 8 shows a further example situation in which, five data subsets and created from original data but where two of the data subsets and two of the parity data sets (2^3 and 3^4) are lost or missing. In this particular reconstruction method 2000, the two missing data subsets 2 and 4 are recovered using the XOR operations shown in the side box.

In general terms, the loss of data subsets in any combination up to (n-1) may still result in all of the data being recoverable.

It is noted that the particular examples shown in figures 7 and 8 are two of many alternative combinations and schemes for recovering data. Furthermore, it is noted that the cyclic approach shown in figure 6 for generating two parity data sets for each data subset is one of many alternatives. For example, each data subset may be paired with non-neighbouring subsets to form parity data.

When dividing the data into data subsets, a predetermined number of data subsets may be chosen. This may relate to the number of available or required storage locations (for each data subset and each parity data set) that are to be used, or separate data channels or other means of transmitting the data subsets from one location to another.

The data map 60 may be used to restore and allow rendering of the content data 15 in its desired format. Web pages may be provided as HTML (hypertext markup language). Under this standard, components of the page are labelled (markup) with tags enclosed in angle brackets "<" and ">". For example the entire page starts with the tag "<html>" and closing tag "</ html>", the main contents page (page body) opens with the tag "<body>" and closing tag "</ body>". Service information may be specified in the tag "<meta>", while scripts (executable scripts), executed on the page within the client's browser, may be enclosed in the tags "<script>" and "</ script>", etc.

As previously described, the payload 50 may contain media forming the web page (e.g. text, images and other elements). The payload 50 is stored and transmitted as separate data components 90. Other information forming the overheads 40 may be stored and transmitted as whole data (undivided). The data map 60 provides the information necessary to the client or browser 20 for restoring the separate data components 90 into the payload 40. The overheads 40 and/or the data map 60 may also contain information necessary to render the content data 15.

Data map 60 may include a set of identifiers for the data components 90 in the form of HTML tags. The data map 60 describes how the data components 90 are to be reassembled to form the payload 40.

The FAT 100 describes how the separate data components 90 from the original content data, are distributed across the distributed data storage system 80. Each separate data component may be assigned an identifier (which may be attached to it, provided as a header or embedded within it, for example). The FAT 100 may include a cross reference of identifier to location (this may also be an identifier such as an address or IP address, for example). Therefore, the FAT 100 provides the processor 130 with the information necessary to retrieve each separate data component.

Either or both the FAT 100 and data map 60 may be encrypted. Both files may have a particular format or grammar. Although any format or grammar may be used depending on specific requirements, the following example formats are provided.

An initialization file Microsoft (ini-files). These files consist of sections in square brackets and a set of parameters, e.g.:

```
[Name of Section]
Parameter = value
...
```

A popular format for providing data across the Internet is XML, which also includes tags similar to HTML. Within these tags are the parameters, e.g.:

```
<Name of Section>
<Parameter options="value of Options">
Name = Value;
        ...
    </Parameter>
</Name of Sections>
```

A further suitable format is JSON, in which data may be written as a name - value pair as well as arrays of values, e.g.:

```
"Parameter" : "Value",
"Parameter" {
    "Name 1" : "Value 1",
    "Name 2" : "Value 2",
    "Name 3" : "Value 3,
```

As will be appreciated by the skilled person, details of the above embodiment may be varied without departing from the scope of the present invention, as defined by the appended claims.

For example, there may be any number of processors 130 (e.g. servers or web servers) including one or more. There may be any number of browsers or clients 20 including one or more. Other ways of dividing the data and/or generating parity data may be used including simple data separation.

There are many different ways of dividing and combining components to form the message other than those described which are provided as examples only. This includes simply dividing the data equally with padding provided optionally as necessary. There are also many different ways to generated parity data (if at all). These methods include applying the XOR logical function in different ways as well as using the Solomon-Reed function. Parity data may also be considered to be redundant data. In this context redundant data is data that is not necessary if all data components are available or safely received but they may be used to assist in regenerating or replicating any missing components or those that for some reason (e.g. corruption) are unavailable. Therefore, the terms parity data and redundant data may be used interchangeably.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

**Claims**

1.  A method of delivering content data (15) over a network comprising the steps of:

    receiving, by a server, a request (70) over a network for content data (15) from a requester, the request including enablement information (75) to enable retrieval of the content data (15) from one or more storage locations (190);
    processing, by the server, the enablement information (75) to determine data allocation within the one or more storage locations (190);
    retrieving, by the server, content data (15) in the form of separate data components (90) from the one or more storage locations (190) according to the determined data allocation, wherein the separate data components (90) include parity data such that any one or more of the separate data components are recreatable from the remaining separate data components (90) and the parity data;
    retrieving, by the server, a data map indicating how the separate data components (90) reassemble to form the content data (15) and which parity data corresponds with which of the separate data components (90);
    sending, by the server, to the requester the separate data components (90) and the data map; and
    wherein the enablement information (75) provides information required to determine the allocation and location of the separate data components (90) within the one or more storage locations (190) or provides access to this information.

2.  The method of claim 1, wherein the enablement information (75) comprises one or more of: data allocation information; encrypted data allocation information; and a decryption key for decrypted data allocation information.

3.  The method of claim 1 or claim 2, wherein processing the enablement information (75) further comprises the step of decrypting encrypted data allocation information using a decryption key.

4.  The method of claim 1, wherein the request is received over the Internet (80) and separate data components are sent over the Internet (80).

5.  The method according to any previous claim, wherein the storage locations (190) are separate storage locations.

6.  The method of claim 4, wherein the separate storage locations are physically and/or remote separate storage locations.

7.  The method of claim 4 or claim 5, wherein processing the enablement information (75) to determine data allocation further comprises obtaining a file allocation table.

8.  The method according to any previous claim, wherein the content data comprises any one or more of: page layout, design elements, video, graphics, audio and web page content.

9.  A method of retrieving content data across a network, the method comprising the steps of:

    requesting for content data from a server, the request (70) including enablement information (75) to enable retrieval of the content data from one or more storage locations (190);
    receiving in response to the request (70) separate data components from the one or more storage locations (190), wherein the separate data components include parity data such that any one or more of the separate data components are recreatable from the remaining separate data components and the parity data;

receiving a data map indicating how the separate data components (90) reassemble to form the content data and which parity data corresponds with which of the separate data components (90); and

regenerating any missing data components from the parity data and the remaining data components (90); and reconstructing the received data components (90) and any regenerated missing data components to form the content data (15) according to the data map;

wherein the enablement information (75) provides information required to determine the allocation and location of the separate data components (90) within the one or more storage locations (190) or provides access to this information.

**10.** A server comprising:

a network interface; and
logic configured to:

receive a request (70) over a network for content data (15) from a requester, the request (70) including enablement information (75) to enable retrieval of the content data (15) from one or more storage locations (190);

process the enablement information (75) to determine data allocation within the one or more storage locations (190);

retrieve content data (15) in the form of separate data components from the one or more storage locations (190) according to the determined data allocation, wherein the separate data components (90) include parity data such that any one or more of the separate data components (90) are recreatable from the remaining separate data components (90) and the parity data; and

retrieve a data map indicating how the separate data components (90) reassemble to form the content data (15) and which parity data corresponds with which of the separate data components (90);

send to the requester the separate data components (90) and the data map,

wherein the enablement information (75) provides information required to determine the allocation and location of the separate data components (90) within the one or more storage locations (190) or provides access to this information.

**11.** A client (20) for retrieving content data (15) across a network, the client (20) comprising logic configured to:

request for content data (15) from a server, the request (70) including enablement information (75) to enable retrieval of the content data (15) from one or more storage locations (190);

receive in response to the request separate data components (90) from the one or more storage locations (190), wherein the separate data components (90) include parity data such that any one or more of the separate data components are recreatable from the remaining separate data components (90) and the parity data;

receive a data map indicating how the separate data components (90) reassemble form the content data (15) and which parity data corresponds with which of the separate data components (90); and

regenerate any missing data components from the parity data and the remaining data components (90); and reconstructing the received data components (90) and any regenerated missing data components to form the content data (15) according to the data map;

wherein the enablement information (75) provides information required to determine the allocation and location of the separate data components (90) within the one or more storage locations (190) or provides access to this information.

**Patentansprüche**

**1.** Verfahren zum Bereitstellen von Inhaltsdaten (15) über ein Netzwerk, umfassend die folgenden Schritte:

Abrufen, durch einen Server, einer Anforderung (70) über ein Netzwerk für Inhaltsdaten (15) von einem Anforderer, wobei die Anforderung Aktivierungsinformationen (75) einschließt, um das Abrufen der Inhaltsdaten (15) von einem oder mehreren Speicherplätzen (190) zu ermöglichen;

Abrufen, durch den Server, der Aktivierungsinformationen (75), um die Datenzuordnung innerhalb eines oder mehrerer Speicherplätze (190) zu bestimmen;

Abrufen, durch den Server, von Inhaltsdaten (15) in Form von getrennten Datenkomponenten (90) aus einem oder mehreren Speicherplätzen (190) gemäß der bestimmten Datenzuordnung durch den Server, wobei die getrennten Datenkomponenten (90) Paritätsdaten einschließen, derart eine oder mehrere der getrennten Datenkomponenten aus den restlichen getrennten Datenkomponenten (90) und den Paritätsdaten rekonstruierbar sind; Abrufen, durch den Server, einer Datenkarte, die angibt, wie die einzelnen Datenkomponenten (90) sich wieder zu den Inhaltsdaten (15) zusammensetzen und welche Paritätsdaten welchen Datenkomponenten (90) entsprechen;

Senden der einzelnen Datenkomponenten (90) und der Datenkarte durch den Server an den Anforderer; und wobei die Aktivierungsinformationen (75) Informationen bereitstellen, die zum Bestimmen der Zuordnung und des Standorts der einzelnen Datenkomponenten (90) innerhalb eines oder mehrerer Speicherplätze (190) erforderlich sind, oder den Zugriff auf diese Informationen bereitstellen.

2. Verfahren nach Anspruch 1, wobei die Aktivierungsinformationen (75) eine oder mehrere von Folgenden umfassen: Datenzuordnungsinformationen; verschlüsselte Datenzuordnungsinformationen; und einen Entschlüsselungsschlüssel für entschlüsselte Datenzuordnungsinformation.

3. Verfahren nach Anspruch 1 oder Anspruch 2, wobei das Verarbeiten der Aktivierungsinformationen (75) ferner den Schritt des Entschlüsselns verschlüsselter Datenzuordnungsinformationen unter Verwendung eines Entschlüsselungsschlüssels umfasst.

4. Verfahren nach Anspruch 1, wobei die Anforderung über das Internet (80) empfangen wird und getrennte Datenkomponenten über das Internet (80) gesendet werden.

5. Verfahren nach einem vorherigen Anspruch, wobei die Speicherplätze (190) getrennte Speicherplätze sind.

6. Verfahren nach Anspruch 4, wobei die getrennten Speicherplätze physisch und/oder entfernte getrennte Speicherplätze sind.

7. Verfahren nach Anspruch 4 oder Anspruch 5, wobei das Verarbeiten der Aktivierungsinformationen (75) zum Bestimmen der Datenzuordnung ferner das Erhalten einer Dateizuordnungstabelle umfasst.

8. Verfahren nach einem vorherigen Anspruch, wobei die Inhaltsdaten eines oder mehrere von folgenden umfassen: Seitenlayout, Designelemente, Video, Grafik, Audio und Webseiteninhalt.

9. Verfahren zum Abrufen von Inhaltsdaten über ein Netzwerk, wobei das Verfahren die folgenden Schritte umfasst:

Anfordern von Inhaltsdaten von einem Server, wobei die Anforderung (70) Aktivierungsinformationen (75) einschließt, um das Abrufen der Inhaltsdaten von einem oder mehreren Speicherplätzen (190) zu ermöglichen;
Empfangen von getrennten Datenkomponenten als Reaktion auf die Anforderung (70) von einem oder mehreren Speicherplätzen (190), wobei die getrennten Datenkomponenten Paritätsdaten einschließen, derart dass eine oder mehrere der getrennten Datenkomponenten aus den restlichen getrennten Datenkomponenten und den Paritätsdaten rekonstruierbar sind;
Empfangen einer Datenkarte, die angibt, wie sich die einzelnen Datenkomponenten (90) aus den Inhaltsdaten neu zusammensetzen und welche Paritätsdaten mit welchen Datenkomponenten (90) übereinstimmen; und Regenerieren von allen fehlenden Datenkomponenten aus den Paritätsdaten und den restlichen Datenkomponenten (90); und
Rekonstruieren der empfangenen Datenkomponenten (90) und aller regenerierten fehlenden Datenkomponenten, um die Inhaltsdaten (15) gemäß der Datenkarte zu bilden;
wobei die Aktivierungsinformationen (75) Informationen bereitstellen, die zum Bestimmen der Zuordnung und des Standorts der einzelnen Datenkomponenten (90) innerhalb eines oder mehrerer Speicherplätze (190) erforderlich sind, oder den Zugriff auf diese Informationen bereitstellen.

10. Server, umfassend:

eine Netzwerkschnittstelle; und
Logik, die konfiguriert ist, um:

Empfangen einer Anforderung (70) über ein Netzwerk für Inhaltsdaten (15) von einem Anforderer, wobei die Anforderung (70) Aktivierungsinformationen (75) einschließt, um das Abrufen der Inhaltsdaten (15) von einem oder mehreren Speicherplätzen (190) zu ermöglichen;

Verarbeiten der Aktivierungsinformationen (75) zum Bestimmen der Datenzuordnung innerhalb eines oder mehrerer Speicherplätze (190);

Abrufen von Inhaltsdaten (15) in Form von getrennten Datenkomponenten von einem oder mehreren Speicherplätzen (190) gemäß der bestimmten Datenzuordnung, wobei die getrennten Datenkomponenten (90) Paritätsdaten einschließen, derart dass eine oder mehrere der getrennten Datenkomponenten (90) aus den restlichen getrennten Datenkomponenten (90) und den Paritätsdaten rekonstruierbar sind; und

Abrufen einer Datenkarte, die angibt, wie sich die einzelnen Datenkomponenten (90) wieder zu den Inhaltsdaten (15) zusammensetzen und welche Paritätsdaten mit welchen Datenkomponenten (90) übereinstimmen;

Senden der einzelnen Datenkomponenten (90) und der Datenkarte an den Anforderer,

wobei die Aktivierungsinformationen (75) Informationen bereitstellen, die zum Bestimmen der Zuordnung und des Standorts der einzelnen Datenkomponenten (90) innerhalb eines oder mehrerer Speicherplätze (190) erforderlich sind, oder den Zugriff auf diese Informationen ermöglichen.

**11.** Client (20) zum Abrufen von Inhaltsdaten (15) über ein Netzwerk, wobei der Client (20) eine Logik umfasst, die zu Folgendem konfiguriert ist:

Anfordern von Inhaltsdaten (15) von einem Server, wobei die Anforderung (70) Aktivierungsinformationen (75) einschließt, um das Abrufen der Inhaltsdaten (15) von einem oder mehreren Speicherplätzen (190) zu ermöglichen;

Empfangen von getrennten Datenkomponenten (90) von einem oder mehreren Speicherplätzen (190) als Reaktion auf die Anforderung, wobei die getrennten Datenkomponenten (90) Paritätsdaten einschließen, so dass eine oder mehrere der getrennten Datenkomponenten aus den restlichen getrennten Datenkomponenten (90) und den Paritätsdaten rekonstruierbar sind;

Empfangen einer Datenkarte, die angibt, wie die einzelnen Datenkomponenten (90) sich wieder aus den Inhaltsdaten (15) zusammensetzen und welche Paritätsdaten welchen Datenkomponenten (90) entsprechen; und

Regenerieren aller fehlenden Datenkomponenten aus den Paritätsdaten und den übrigen Datenkomponenten (90); und

Rekonstruieren der empfangenen Datenkomponenten (90) und aller regenerierten fehlenden Datenkomponenten, um die Inhaltsdaten (15) gemäß der Datenkarte zu bilden;

wobei die Aktivierungsinformationen (75) Informationen bereitstellen, die zum Bestimmen der Zuordnung und des Standorts der einzelnen Datenkomponenten (90) innerhalb eines oder mehrerer Speicherplätze (190) erforderlich sind, oder den Zugriff auf diese Informationen bereitstellen.

**Revendications**

**1.** Procédé de distribution de données de contenu (15) sur un réseau comprenant les étapes consistant à :

recevoir, par un serveur, une demande (70) via un réseau de données de contenu (15) provenant d'un demandeur, la demande comportant des informations d'activation (75) pour activer la récupération des données de contenu (15) à partir d'un ou de plusieurs emplacements de stockage (190) ;

traiter, par le serveur, les informations d'activation (75) afin de déterminer l'allocation de données dans le ou les plusieurs emplacements de stockage (190) ;

récupérer, par le serveur, des données de contenu (15) sous la forme de composantes de données séparées (90) à partir du ou des plusieurs emplacements de stockage (190) conformément à l'allocation de données déterminée, où les composantes de données séparées (90) comportent des données de parité de sorte que l'une quelconque ou plusieurs des composantes de données séparées puissent être reconstituées à partir des composantes de données séparées restantes (90) et des données de parité ;

récupérer, par le serveur, une carte de données indiquant comment les composantes de données séparées (90) se réassemblent pour former les données de contenu (15) et quelles données de parité correspondent à quelles composantes des composantes de données séparées (90) ;

envoyer, par le serveur, au demandeur les composantes de données séparées (90) et la carte de données ; et dans lequel les informations d'activation (75) fournissent des informations nécessaires pour déterminer l'allocation et l'emplacement des composantes de données séparées (90) dans le ou les plusieurs emplacements de stockage (190) ou fournissent un accès à ces informations.

**2.** Procédé de la revendication 1, dans lequel les informations d'activation (75) comprennent : des informations d'al-

EP 2 820 589 B1

location de données ; et/ou des informations d'allocation de données cryptées ; et/ou une clé de décryptage pour des informations d'allocation de données décryptées.

3. Procédé de la revendication 1 ou 2, dans lequel le traitement des informations d'activation (75) comprend en outre l'étape consistant à décrypter des informations d'allocation de données cryptées en utilisant une clé de décryptage.

4. Procédé de la revendication 1, dans lequel la demande est reçue via Internet (80) et les composantes de données séparées sont envoyées via Internet (80).

5. Procédé selon l'une quelconque des revendications précédentes, dans lequel les emplacements de stockage (190) sont des emplacements de stockage séparés.

6. Procédé de la revendication 4, dans lequel les emplacements de stockage séparés sont des emplacements de stockage distants et/ou séparés physiquement.

7. Procédé de la revendication 4 ou 5, dans lequel le traitement des informations d'activation (75) pour déterminer l'allocation de données comprend en outre l'obtention d'une table d'allocation de fichiers.

8. Procédé selon l'une quelconque des revendications précédentes, dans lequel les données de contenu comprennent : une mise en page, et/ou des éléments de conception, et/ou une vidéo, et/ou des graphiques, et/ou un contenu audio et/ou de page Web.

9. Procédé de récupération de données de contenu par l'intermédiaire d'un réseau, le procédé comprenant les étapes consistant à :

   demander des données de contenu à un serveur, la demande (70) comportant des informations d'activation (75) pour activer la récupération des données de contenu à partir d'un ou de plusieurs emplacements de stockage (190) ;
   recevoir en réponse à la demande (70) des composantes de données séparées provenant d'un ou de plusieurs emplacements de stockage (190), où les composantes de données séparées comportent des données de parité de sorte que l'une quelconque ou plusieurs des composantes de données séparées puissent être reconstituées à partir des composantes de données séparées restantes et des données de parité ;
   recevoir une carte de données indiquant comment les composantes de données séparées (90) se réassemblent pour former les données de contenu et quelles données de parité correspondent à quelles composantes des composantes de données séparées (90) ; et
   régénérer toutes les composantes de données manquantes à partir des données de parité et des composantes de données restantes (90) ; et
   reconstruire les composantes de données reçues (90) et toutes les composantes de données manquantes régénérées pour former les données de contenu (15) en fonction de la carte de données ;
   dans lequel les informations d'activation (75) fournissent des informations nécessaires pour déterminer l'allocation et l'emplacement des composantes de données séparées (90) dans le ou les plusieurs emplacements de stockage (190) ou fournissent un accès à ces informations.

10. Serveur comprenant :

   une interface réseau ; et
   une logique configurée pour :

      recevoir une demande (70) via un réseau de données de contenu (15) provenant d'un demandeur, la demande (70) comportant des informations d'activation (75) pour activer la récupération des données de contenu (15) à partir d'un ou de plusieurs emplacements de stockage (190) ;
      traiter les informations d'activation (75) afin de déterminer l'allocation de données dans le ou les plusieurs emplacements de stockage (190) ;
      récupérer des données de contenu (15) sous la forme de composantes de données séparées (90) à partir du ou des plusieurs emplacements de stockage (190) conformément à l'allocation de données déterminée, où les composantes de données séparées (90) comportent des données de parité de sorte que l'une quelconque ou plusieurs des composantes de données séparées puissent être reconstituées à partir des composantes de données séparées restantes (90) et des données de parité ; et

récupérer une carte de données indiquant comment les composantes de données séparées (90) se réassemblent pour former les données de contenu (15) et quelles données de parité correspondent à quelles composantes des composantes de données séparées (90) ;

envoyer au demandeur les composantes de données séparées (90) et la carte de données,

dans lequel les informations d'activation (75) fournissent des informations nécessaires pour déterminer l'allocation et l'emplacement des composantes de données séparées (90) dans le ou les plusieurs emplacements de stockage (190) ou fournissent un accès à ces informations.

11. Client (20) pour la récupération de données de contenu (15) par l'intermédiaire d'un réseau, le client (20) comprenant une logique configurée pour :

demander des données de contenu (15) à un serveur, la demande comportant des informations d'activation (75) pour activer la récupération des données de contenu (15) à partir d'un ou de plusieurs emplacements de stockage (190) ;

recevoir en réponse à la demande des composantes de données séparées (90) provenant du ou des plusieurs emplacements de stockage (190), où les composantes de données séparées (90) comportent des données de parité de sorte que l'une quelconque ou plusieurs des composantes de données séparées puissent être reconstituées à partir des composantes de données séparées restantes (90) et des données de parité ;

recevoir une carte de données indiquant comment les composantes de données séparées (90) se réassemblent pour former les données de contenu (15) et quelles données de parité correspondent à quelles composantes de données séparées (90) ; et

régénérer toutes les composantes de données manquantes à partir des données de parité et des composantes de données restantes (90) ; et

reconstruire les composantes de données reçues (90) et toutes les composantes de données manquantes régénérées pour former les données de contenu (15) conformément à la carte de données ;

dans lequel les informations d'activation (75) fournissent des informations nécessaires pour déterminer l'allocation et l'emplacement des composantes de données séparées (90) dans le ou les plusieurs emplacements de stockage (190) ou fournissent un accès à ces informations.

Fig. 1

Fig. 2

Fig. 3

```
┌─────────────────────────────┐
│                             │       ← 200
│      Web content data       │
│            15               │
│                             │
└─────────────────────────────┘
               │
               ▼
┌─────────────────────────────┐
│      Split into data into   │
│         components          │
│            220              │
└─────────────────────────────┘
               │
               ▼
┌─────────────────────────────┐
│                             │
│      Generate parity data   │
│            230              │
│                             │
└─────────────────────────────┘
               │
               ▼
┌─────────────────────────────┐
│   Generate data allocation  │
│         information         │
│            240              │
└─────────────────────────────┘
               │
               ▼
┌─────────────────────────────┐
│     Generate map of data    │
│       and overheads         │
│            250              │
└─────────────────────────────┘
               │
               ▼
┌─────────────────────────────┐
│     Encrypt data allocation │
│         information         │
│            260              │
└─────────────────────────────┘
               │
               ▼
┌─────────────────────────────┐
│      Encrypt map of data    │
│       and/or overheads      │
│                             │
│            270              │
└─────────────────────────────┘
               │
               ▼
┌─────────────────────────────┐
│      Store components       │
│                             │
│            280              │
└─────────────────────────────┘
```

Fig. 4

300

```
┌─────────────────────────┐
│   Receive browser request │
│   including FAT key       │
│          310             │
└─────────────────────────┘
            │
            ▼
┌─────────────────────────┐
│   Obtain FAT from key    │
│                          │
│          320             │
└─────────────────────────┘
            │
            ▼
┌─────────────────────────┐
│  Retrieve data components │
│  and parity data according to │
│          FAT             │
│          330             │
└─────────────────────────┘
            │
            ▼
┌─────────────────────────┐
│   Send data components   │
│  and parity data to browser │
│          340             │
└─────────────────────────┘
            │
            ▼
┌─────────────────────────┐
│    Send overheads to     │
│        browser           │
│          350             │
└─────────────────────────┘
```

Fig. 5

400

```
Send browser request
including FAT key
410
```

↓

```
Receive data components
and parity data
420
```

↓

```
Receive overheads
including data map
430
```

↓

```
Regenerate missing data
components
440
```

↓

```
Decrypt data map
450
```

↓

```
Render web page using
data map
460
```

## Fig. 6

Legend:
- parity sets (dashed circles)
- data subsets (solid circles)

1000

## Fig. 7

$3\wedge(2\wedge3)=\mathbf{2} \rightarrow 2\wedge(1\wedge2)=\mathbf{1}$
$3\wedge(3\wedge4)=\mathbf{4} \rightarrow 4\wedge(4\wedge5)=\mathbf{5}$
OR
$3\wedge(2\wedge3)=\mathbf{2}, \quad 3\wedge(2\wedge3)\wedge(1\wedge2)=\mathbf{1}$
$3\wedge(3\wedge4)=\mathbf{4}, \quad 3\wedge(3\wedge4)\wedge(4\wedge5)=\mathbf{5}$

Lost data

## Fig. 8

$5\wedge(4\wedge5)=\mathbf{4}, \quad 1\wedge(1\wedge2)=\mathbf{2}$

Lost data

2000

**EP 2 820 589 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070156842 A
- US 2008126357 A